# DEMANDE DE BREVET EUROPEEN

(11) **EP 4 613 576 A1**
(43) Date de publication de la demande: **10.09.2025**
(21) Numéro de dépôt: 25156685.7
(22) Date de dépôt: 07.02.2025
(51) Int. Cl.: B60S 1/04, B60R 16/02, F16L 3/12, B60S 1/08

(54) **SUPPORT POUR GROUPE ÉLECTRIQUE D'ACTIONNEMENT D'UN SYSTÈME D'ESSUYAGE DE VÉHICULE**

(30) Priorité: 07.03.2024 FR 2402289
(71) Demandeur: Stellantis Auto SAS, 78300 Poissy (FR)
(72) Inventeur: MERAOUF, ZAKARIA, 80040 AGADIR (MA); YASSAM, BADR, 20270 CASABLANCA (MA); EL HAMDI, OTMANE, 20270 CASABLANCA (MA); BARTOLI, FABRICE, 90000 BELFORT (FR); STEINMETZ, JEAN YVES, 90160 BESSONCOURT (FR)
(74) Mandataire: BCIP

(57) **Abrégé**

L'invention concerne un support (100) pour groupe électrique d'actionnement (200) d'un système d'essuyage de véhicule automobile, comportant une platine (110) comprenant une partie centrale (111) prévue pour recevoir fixement ledit groupe électrique d'actionnement (200) ainsi que plusieurs excroissances en forme de bras (113) réparties autour de ladite partie centrale (111) et destinées à assurer la liaison mécanique entre ledit support (100) et au moins un élément de la structure de caisse dudit véhicule ;
caractérisé en ce que ledit support (100) comporte également au moins une agrafe d'attache (130) comprenant une tête (131) portant des moyens de maintien aptes à enserrer un faisceau d'alimentation électrique (F) dudit groupe électrique d'actionnement (200), ainsi qu'un étrier d'ancrage en forme de U (133) monté à chevauchement sur une nervure (119) ménagée sur ladite platine (110).

## Description

### [Domaine technique]

La présente invention se rapporte au domaine des systèmes d'essuyage des vitrages de véhicules automobiles. Elle concerne en particulier un support pour groupe électrique d'actionnement d'un tel système d'essuyage.

### [Technique antérieure]

Les systèmes d'essuyage sont bien connus de l'art antérieur et permettent d'essuyer un vitrage d'un véhicule automobile tel que son pare-brise avant ou sa lunette arrière en cas de pluie ou de chute de neige afin de préserver une bonne vision de l'environnement pour le conducteur.

Un tel système d'essuyage comporte classiquement au moins un bras dont une première extrémité porte un balai muni d'une raclette d'essuyage souple destinée à balayer la surface du vitrage du véhicule pour évacuer l'eau en dehors du champ de vision du conducteur, et dont la seconde extrémité est couplée à un arbre rotatif d'un sous-ensemble d'entrainement monté fixement sur la structure de caisse de ce véhicule.

Dans le cas de systèmes d'essuyage comprenant deux bras écartés l'un de l'autre et fonctionnant simultanément, tels que par exemple ceux destinés à assurer le nettoyage des pare-brises avant, il est bien connu, par exemple du document FR 3 021 272 A1, d'assurer le mouvement de va-et-vient des deux bras par un sous-ensemble d'entrainement comportant un unique moteur électrique associé à un mécanisme de timonerie reliant l'axe du moteur aux arbres rotatifs des bras ainsi qu'une structure généralement tubulaire sur laquelle viennent se fixer le moteur et des paliers de guidage en rotation des arbres rotatifs.

Implantés généralement en pied du pare-brise avant du véhicule dans une zone dénommée couramment « baie de pare-brise », ces sous-ensembles d'entrainement sont fixés sur au moins un élément de la structure de caisse du véhicule au moyen de pattes solidaires de la structure tubulaire.

Chargé de transformer le mouvement de rotation à sens constant de l'axe du moteur en deux mouvements de va-et-vient des bras, le mécanisme de timonerie de ces sous-ensembles d'entrainement comprend de nombreuses pièces et articulations qui augmentent le risque de pannes provoquent des pannes et grèvent les coûts.

Afin de palier à ce problème, il est connu pour assurer l'entrainement des deux bras d'utiliser deux sous-ensembles d'entrainement distincts comportant chacun un groupe électrique d'entrainement monté sur un support.

Tel que décrit par exemple par le document FR 2 965 232 A1, un tel support comporte classiquement une platine comprenant une partie centrale prévue pour recevoir fixement ledit groupe électrique d'actionnement ainsi que plusieurs excroissances en forme de bras réparties autour de ladite partie centrale et destinées à assurer la liaison mécanique entre ledit support et au moins un élément de la structure de caisse dudit véhicule.

Le groupe électrique d'actionnement d'un tel sous-ensemble d'entrainement est pourvu d'un connecteur d'alimentation sur lequel est destiné à venir se brancher un connecteur complémentaire ménagé à une extrémité d'un faisceau d'alimentation électrique issu de l'habitacle et relié à une source d'alimentation électrique du véhicule telle que la batterie de service basse tension de ce véhicule.

Lorsque le faisceau d'alimentation électrique issu de l'habitacle se situe au-dessus du connecteur du groupe électrique d'entrainement, le cheminement de ce faisceau peut faire en sorte que des gouttelettes d'eau s'écoulent le long de celui-ci par capillarité et pénètrent dans ce connecteur, de sorte à générer potentiellement de l'oxydation et/ou des courts circuits préjudiciables au bon fonctionnement du système d'essuyage.

### [Exposé de l'invention]

La présente invention vise à améliorer la situation.

Elle propose à cet effet un support pour groupe électrique d'actionnement d'un système d'essuyage de véhicule automobile, comportant une platine comprenant une partie centrale prévue pour recevoir fixement ledit groupe électrique d'actionnement ainsi que plusieurs excroissances en forme de bras réparties autour de ladite partie centrale et destinées à assurer la liaison mécanique entre ledit support et au moins un élément de la structure de caisse dudit véhicule ;
caractérisé en ce que ledit support comporte également au moins une agrafe d'attache comprenant une tête portant des moyens de maintien aptes à enserrer un faisceau d'alimentation électrique dudit groupe électrique d'actionnement, ainsi qu'un étrier d'ancrage en forme de U monté à chevauchement sur une nervure ménagée sur ladite platine.

La présence de cette agrafe d'attache permet de « casser » la continuité de la pente du faisceau d'alimentation électrique du groupe électrique d'actionnement de sorte à empêcher les gouttelettes d'eau s'écoulant le long de la partie de ce faisceau située au dessus et en amont de cette agrafe de poursuivre leur cheminement par capillarité jusqu'au connecteur d'alimentation.

Selon des caractéristiques préférées dudit support selon l'invention :
- au moins l'une des deux faces de ladite nervure présente deux protubérances de guidage latérales délimitant sur cette nervure une zone d'accueil pour ladite agrafe d'attache ;
- ladite zone d'accueil présente une épaisseur différente de celle du reste de ladite nervure ;
- ladite nervure s'étend sensiblement verticalement en dessous de ladite partie centrale de la platine ;
- ladite nervure présente une forme triangulaire en étant adossée par deux de ses côtés adjacents respectivement à ladite partie centrale et à l'une desdites excroissances de la platine ;
- ladite agrafe d'attache est de type métallo-plastique ;
- ledit étrier d'ancrage de l'agrafe d'attache comprend un insert métallique doté de deux séries de griffes de retenue saillant à l'intérieur du U depuis ses deux branches et venant en prise sur les deux faces de ladite nervure ;
- lesdits moyens de maintien sont constitués par un collier de serrage
autobloquant ; et/ou
- ladite platine est venue de moulage d'une seule pièce dans un alliage métallique.

L'invention vise également sous un second aspect un sous-ensemble d'entrainement pour système d'essuyage d'une vitre de véhicule automobile comportant un tel support et un groupe électrique d'actionnement rapporté fixement contre la partie centrale de la platine dudit support.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
- [Fig 1] représente une vue en élévation d'un sous-ensemble d'entrainement pour système d'essuyage de véhicule automobile comportant un support pour groupe électrique d'actionnement selon l'invention ;
- [Fig 2] est une vue partielle en perspective du support selon l'invention sur laquelle la partie située à droite du plan de coupe II-II de la figure 1 a été arrachée ;
- [Fig 3] représente une vue en perspective de la platine seule du support selon l'invention ; et
- [Fig 4] est une vue agrandie partielle de la zone d'implantation de l'agrafe d'attache du faisceau d'alimentation sur la platine de la figure 3.

### [Description détaillée]

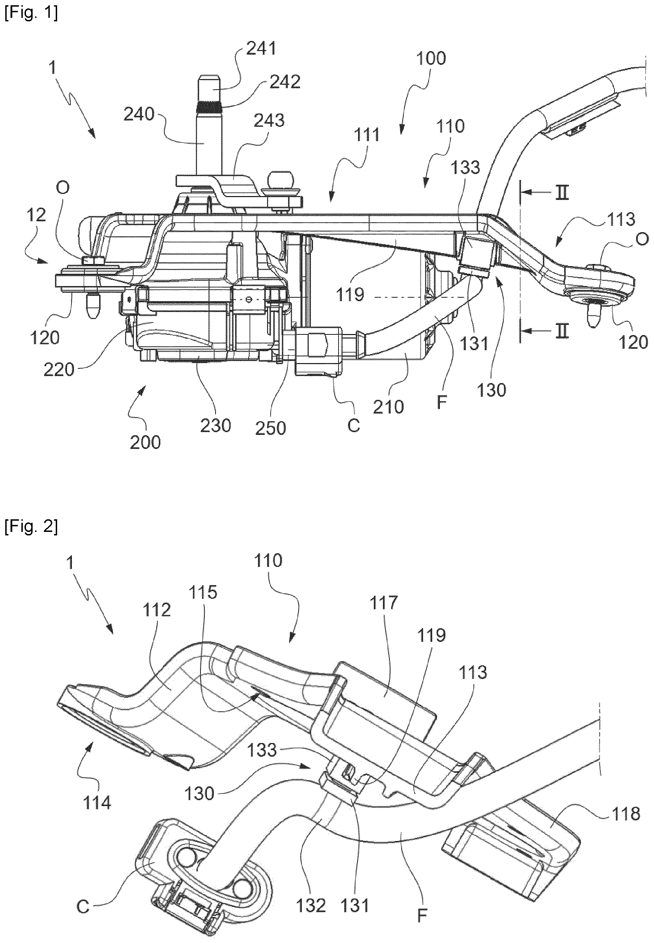

La figure 1 illustre un sous-ensemble d'entrainement 1 pour système d'essuyage destiné à être monté fixement sur au moins un élément non représenté de la structure de caisse d'un véhicule automobile en bordure inférieure du pare-brise de ce véhicule pour entrainer le ou l'un des balais d'essuyage de ce système d'essuyage.

Dans la description qui va suivre et par convention, lorsque l'on fera référence à des qualificatifs d'orientation (tel que le terme « vertical ») ou de position (tels que les termes « supérieur », « inférieur », « haut » ou « bas »), ces derniers seront définis par rapport à la position normale de montage de ce sous-ensemble d'entrainement 1 dans un véhicule.

Tel qu'illustré par cette figure 1, le sous-ensemble d'entrainement 1 comporte un support 100 représenté seul sur la figure 2 et comprenant une platine 110 venue avantageusement de moulage d'une seule pièce dans un alliage métallique par exemple à base d'aluminium. Ce sous-ensemble d'entrainement 1 comporte également un groupe électrique d'actionnement 200 porté fixement par la platine 110 de ce support 100.

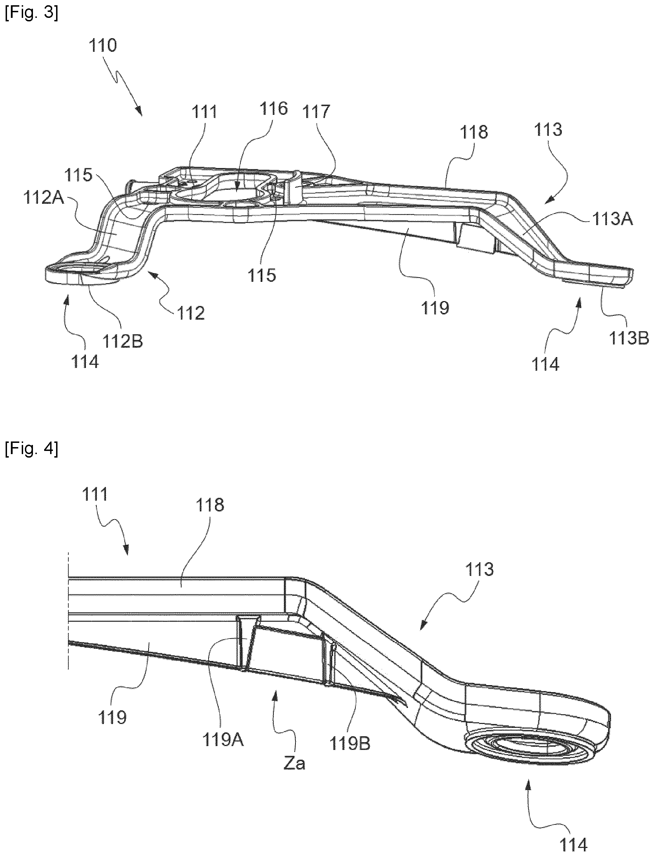

Représentée seule sur la figure 3, la platine 110 comprend une partie centrale sensiblement plate 111 contre la face inférieure de laquelle est rapporté fixement le groupe électrique d'actionnement 200, ainsi que plusieurs excroissances en forme de bras 112, 113 réparties autour de cette partie centrale 111.

En l'espèce au nombre de deux, ces excroissances 112, 113 sont destinées à assurer la liaison mécanique entre le support 100 et au moins un élément de la structure de caisse à laquelle ce support 100 doit être fixé.

Chaque excroissance 112, 113 comprend une portion proximale 112A, 113A s'étendant depuis la partie centrale 111 suivant un plan moyen incliné vis-à-vis de celui de cette partie centrale 111, et se prolongeant par une portion distale d'extrémité libre 112B, 113B s'étendant ici suivant un plan moyen sensiblement parallèle à celui de cette même partie centrale 111.

La portion d'extrémité libre 112B, 113B de chacune de ces excroissances 112, 113 présente un orifice circulaire 114 recevant un plot amortisseur 120 (voir figure 1), connu également sous la dénomination « Silentbloc », et destiné à atténuer la transmission des vibrations entre le support 100 et la structure de caisse du véhicule.

Chaque plot amortisseur 120 comporte un corps sensiblement cylindrique réalisé dans un matériau élastiquement déformable tel qu'un élastomère, par exemple en caoutchouc naturel ou en EPDM (« Ethylène Propylène Diène Monomère »), et présentant un alésage axial destiné à recevoir un organe de fixation O tel qu'une vis ou un goujon. La face latérale extérieure de ce corps est en outre pourvue d'une gorge transversale annulaire, non visible, reçue par le pourtour d'un orifice circulaire correspondant 114 de la platine 110, de sorte à assurer le maintien du plot 120 par rapport à cette platine 110 selon la direction axiale.

Tel qu'illustré par la figure 3 et afin de solidariser mécaniquement de manière isostatique et amovible le groupe électrique d'actionnement 200 au support 100, la platine 110 comprend des moyens de fixation constitués en l'espèce par plusieurs trous 115 ménagés dans sa partie centrale 111 et prévus pour être traversés chacun par une vis respective venant se visser ensuite dans un perçage taraudé correspondant ménagé dans ce groupe électrique d'actionnement 200.

Selon des variantes de réalisation non représentées, les moyens de fixation isostatique du groupe électrique d'actionnement 200 au support 100 peuvent être de type différent

Se présentant sous la forme d'un unique boîtier, le groupe électrique d'actionnement 200 comporte un moteur électrique 210 par exemple de type à courant continu, un dispositif réducteur 220, ainsi qu'un dispositif de pilotage 230 gérant le fonctionnement de ce moteur 210.

Le dispositif réducteur 220 permet de transmettre, via des moyens d'engrenage (par exemple à couple conique ou à roue denté et vis sans fin), le mouvement de rotation de l'axe du moteur électrique 210 à un arbre rotatif d'entrainement 240 orienté perpendiculairement par rapport à l'arbre de ce moteur électrique 210 et sur lequel est destiné à venir se fixer directement une première extrémité d'un bras d'essuyage non représenté d'un système d'essuyage.

L'extrémité libre de cet arbre rotatif d'entrainement 240 présente un tronçon cylindrique fileté 241 sur lequel est destiné à vernir se visser cette première extrémité d'un bras d'essuyage, ainsi qu'un tronçon tronconique 242 s'étendant juste en dessous de ce tronçon fileté 241 et pourvu de cannelures ou de striures permettant de garantir l'absence de mouvement relatif entre cet arbre rotatif d'entrainement 240 et ce bras d'essuyage.

Dans le cas d'un système d'essuyage comprenant deux bras écartés l'un de l'autre et fonctionnant simultanément, tels que par exemple ceux destinés à assurer le nettoyage du pare-brise avant, le dispositif de pilotage 230 sera en communication électrique avec celui gérant le fonctionnement du moteur électrique du mécanisme d'entrainement du second bras de ce système d'essuyage de sorte que le déplacement de ces deux bras s'effectue de manière synchronisée.

Comme illustré par la figure 3, la partie centrale 111 de la platine 110 présente une fenêtre de passage 116 traversée par l'arbre rotatif d'entrainement 240, par une patte 243 saillant radialement depuis la base de l'arbre rotatif d'entrainement 240 dont elle est solidaire en rotation, ainsi que par une portion du dispositif réducteur 220.

En périphérie de cette fenêtre de passage 116, la platine 110 comprend également une butée à section en arc de cercle 117 s'étendant en saillie depuis la face supérieure de sa partie centrale 111 et dont les deux bords latéraux sont destinés à coopérer en butée avec la patte 243 de sorte à définir les deux positions extrêmes que peut adopter un bras d'essuyage fixé sur l'arbre rotatif d'entrainement 240 au cours de son mouvement de va-et-vient.

Afin d'améliorer sa rigidité mécanique, la platine 110 comprend avantageusement un bord tombé 118 s'étendant vers le haut le long de la bordure périphérique de sa partie centrale 111 et de ses excroissances 112, 113.

Tel qu'illustré par la figure 1, le groupe électrique d'actionnement 200 est doté d'un connecteur d'alimentation 250 sur lequel est destiné à venir se brancher un connecteur complémentaire C ménagé à une extrémité d'un faisceau d'alimentation électrique F issu de l'habitacle et relié à une source d'alimentation électrique du véhicule non représentée, telle que la batterie de service basse tension de ce véhicule.

Cheminant au-dessus du connecteur d'alimentation 250 du groupe électrique d'entrainement 200, la présence de ce faisceau d'alimentation électrique F pourrait amener à ce que des gouttelettes d'eau s'écoulent le long de celui-ci par capillarité et pénètrent dans ce connecteur d'alimentation 250.

Afin de palier à cette éventualité et en référence à la figure 2, le support 100 comporte également au moins une agrafe d'attache 130 comprenant une tête 131 portant des moyens de maintien 132 aptes à enserrer ce faisceau d'alimentation F, ainsi qu'un étrier d'ancrage en forme de U 133 monté à chevauchement sur une nervure 119 ménagée sur la platine 110 et s'étendant sensiblement verticalement en dessous de sa partie centrale 111.

Comme cela est bien visible sur la figure 2, la présence de cette agrafe d'attache 130 permet de « casser » la continuité de la pente du faisceau F de sorte à empêcher les gouttelettes d'eau s'écoulant le long de la partie de ce faisceau F située au dessus et en amont de cette agrafe 130 de poursuivre leur cheminement par capillarité jusqu'au connecteur d'alimentation 250.

Comme cela est bien visible sur la figure 4 et afin d'assurer un positionnement optimal de l'agrafe d'attache 130 garantissant la non atteinte de ce connecteur d'alimentation 250 par des gouttelettes d'eau provenant du faisceau F, au moins l'une des deux faces de la nervure 119 présente avantageusement deux protubérances de guidage latérales 119A, 119B délimitant sur cette nervure 119 une zone d'accueil Za pour cette agrafe d'attache 130.

Toujours en référence à la figure 4, on notera que l'épaisseur de cette zone d'accueil Za de la nervure 119 peut différer de celle du reste de cette nervure 119 afin de s'adapter au mieux à l'écartement entre les branches de l'étrier d'ancrage 133 de l'agrafe 130. Cette épaisseur de la zone d'accueil Za qui est en l'espèce inférieure à celle du reste de cette nervure 118 pourra ainsi être ajustée facilement par retrait ou ajout de matière dans le moule servant à fabriquer la platine 110.

Comme illustré par la figure 1, la nervure 119 présente avantageusement une forme triangulaire en étant adossée par deux de ses côtés adjacents respectivement à la partie centrale 111 de cette platine et à l'une 113 de ses excroissances en forme de bras, de sorte à renforcer la résistance mécanique à la torsion de cette excroissance 113.

Afin d'assurer un excellent ancrage de l'agrafe d'attache 130 et de limiter les risques d'arrachement de cette dernière, cette agrafe 130 est avantageusement de type métallo-plastique.

Son étrier d'ancrage 133 peut ainsi par exemple comprendre un insert métallique doté de deux séries de griffes de retenue saillant à l'intérieur du U depuis ses deux branches et venant en prise sur les deux faces de la nervure 119.

Les moyens de maintien sont en l'espèce constitués par un collier de serrage autobloquant 132 comprenant par exemple une lanière ainsi qu'un organe de serrage surmontant l'étrier d'ancrage 133 et étant raccordé à l'une des extrémités de la lanière, cet organe de serrage présentant une ouverture de passage apte à recevoir l'extrémité libre de cette même lanière.

Selon des variantes de réalisation non représentées, les moyens de maintien peuvent être d'un type différent. Ces derniers peuvent par exemple être constitués d'un collier formé par deux arceaux symétriques de forme générale semi-circulaire, raccordés l'un à l'autre par l'une de leurs extrémités par l'intermédiaire d'une charnière d'articulation élastiquement déformable permettant leur écartement puis leur rapprochement mutuel de sorte à assurer la fermeture du collier. Ces deux arceaux comportent également à leurs extrémités opposées à la charnière d'articulation des moyens de verrouillage aptes à coopérer ensemble pour assurer le maintien du collier en position fermée de serrage.

Ces moyens de maintien peuvent être également constitués par une bride élastiquement déformable en forme de lyre dont les deux extrémités libres séparées par une fente sont recourbées de manière à former un V facilitant l'insertion de l'élément allongé.

Selon des variantes de réalisation non représentées, les moyens de maintien pourraient être montables de manière amovible sur la tête de cette agrafe via des moyens complémentaires d'assemblage.

Selon d'autres variantes de réalisation non représentés, le sous-ensemble d'entrainement selon l'invention pourrait également être monté en bordure inférieure de la lunette arrière d'un véhicule pour entrainer le balai d'essuyage du système d'essuyage de cette lunette arrière.

De nombreuses variantes sont envisageables et on rappelle à cet égard que la présente invention ne se limite pas aux formes de réalisation décrites et représentées, mais englobe également toutes les variantes d'exécution à la portée de l'homme du métier. 1

## Revendications

1. Support (100) pour groupe électrique d'actionnement (200) d'un système d'essuyage de véhicule automobile, comportant une platine (110) comprenant une partie centrale (111) prévue pour recevoir fixement ledit groupe électrique d'actionnement (200) ainsi que plusieurs excroissances en forme de bras (112, 113) réparties autour de ladite partie centrale (111) et destinées à assurer la liaison mécanique entre ledit support (100) et au moins un élément de la structure de caisse dudit véhicule ; **caractérisé en ce que** ledit support (100) comporte également au moins une agrafe d'attache (130) comprenant une tête (131) portant des moyens de maintien (132) aptes à enserrer un faisceau d'alimentation électrique (F) dudit groupe électrique d'actionnement (200), ainsi qu'un étrier d'ancrage en forme de U (133) monté à chevauchement sur une nervure (119) ménagée sur ladite platine (110).

2. Support (100) selon la revendication 1, **caractérisé en ce qu'**au moins l'une des deux faces de ladite nervure (119) présente deux protubérances de guidage latérales (119A, 119B) délimitant sur cette nervure une zone d'accueil (Za) pour ladite agrafe d'attache (130).

3. Support (100) selon la revendication 2, **caractérisé en ce que** ladite zone d'accueil (Za) présente une épaisseur différente de celle du reste de ladite nervure (119).

4. Support (100) selon l'une des revendications 1 à 3, **caractérisé en ce que** ladite nervure (119) s'étend sensiblement verticalement en dessous de ladite partie centrale (111) de la platine (110).

5. Support (100) selon l'une des revendications 1 à 4, **caractérisé en ce que** ladite nervure (119) présente une forme triangulaire en étant adossée par deux de ses côtés adjacents respectivement à ladite partie centrale (111) et à l'une (113) desdites excroissances (112, 113) de la platine (110).

6. Support (100) selon l'une des revendications 1 à 5, **caractérisé en ce que** ladite agrafe d'attache (130) est de type métallo-plastique.

7. Support (100) selon la revendication 6, **caractérisé en ce que** ledit étrier d'ancrage (133) de l'agrafe d'attache (130) comprend un insert métallique doté de deux séries de griffes de retenue saillant à l'intérieur du U depuis ses deux branches et venant en prise sur les deux faces de ladite nervure (119).

8. Support (100) selon l'une des revendications 1 à 7, **caractérisé en ce que** lesdits moyens de maintien sont constitués par un collier de serrage autobloquant (132).

9. Support (100) selon l'une des revendications 1 à 8, **caractérisé en ce que** ladite platine (110) est venue de moulage d'une seule pièce dans un alliage métallique.

10. Sous-ensemble d'entrainement (1) pour système d'essuyage d'une vitre de véhicule automobile comportant un support (100) selon l'une des revendication 1 à 9 et un groupe électrique d'actionnement (200) rapporté fixement contre la partie centrale (111) de la platine (110) dudit support (100).
